## Europäisches Patentamt

## European Patent Office

## Office européen des brevets

(19)

(11) Publication number: **0 249 469**
**B1**

(12) **EUROPEAN PATENT SPECIFICATION**

(45) Date of publication of the patent specification:
09.05.90

(51) Int. Cl.⁵: **F16D 13/71**

(21) Application number: 87305156.9

(22) Date of filing: 11.06.87

(54) Friction clutch cover assemblies.

(30) Priority: 13.06.86 GB 8614421
24.12.86 GB 8630897

(43) Date of publication of application:
16.12.87 Bulletin 87/51

(45) Publication of the grant of the patent:
09.05.90 Bulletin 90/19

(84) Designated Contracting States:
DE FR GB IT

(56) References cited:
FR-A- 2 507 268
FR-A- 2 560 314

PATENT ABSTRACTS OF JAPAN, vol. 10,
no. 187 (M-493)[2243], 2nd July 1986; &
JP-A-61 31 721 (DAIKIN MFG CO. LTD) 14-02-1986
Idem

(73) Proprietor: **AUTOMOTIVE PRODUCTS PUBLIC LIMITED COMPANY**, Tachbrook Road, Leamington Spa Warwickshire CV31 3ER(GB)

(72) Inventor: **Maycock, Ian Commander**, 149 Cubbington Road Lillington, Leamington Spa Warwickshire(GB)
Inventor: **Bolton, John Stephen**, 18 Litchfield Avenue, Evesham Worcestershire(GB)
Inventor: **Clarke, Derek Walter John**, 97 Sussex Road, Coventry Warwickshire(GB)

(74) Representative: **Stanley, Michael Gordon**, Michael Stanley & Co. 86 Warwick Road, Banbury, OX16 7AJ(GB)

ACTORUM AG

## Description

This invention relates to friction clutch cover assemblies, for example clutch cover assemblies for motor vehicles.

In a typical motor vehicle friction clutch, a driven plate, rotationally fast with the input shaft of a gearbox, is sandwiched between a flywheel on the engine crankshaft and a pressure plate. The pressure plate is usually mounted in a clutch cover assembly, and the cover is in turn mounted on the flywheel. The pressure plate is rotationally fast with the cover and the flywheel and is biased away from the cover by spring(s) to trap the driven plate between itself and the flywheel. Drive straps holding the pressure plate rotationally fast with the cover allow the pressure plate to move axially so as to enable the driven plate to be released or clamped between the flywheel and pressure plate as required.

During the clamping of a driven plate between the flywheel and pressure plate, i.e. when the vehicle clutch is engaged, it is desirable for there to be some axial resilience in the friction clutch during the engagement of the friction surfaces of the driven plate with like surfaces on the pressure plate and flywheel.

In prior art clutches the axial resilience is achieved by having cushioning elements within the driven plate or alternatively by having cushioning elements within the pressure plate as is shown in British Patent 1 050 553, or US 4 291 792. In British Patent 1 453 287 there is disclosed an annular insert in the pressure plate for contacting the diaphragm spring and which has been made resilient with a series of undulations. Alternatively a resilient, wavy fulcrum ring has been located between the diaphragm spring and the clutch cover, for example as disclosed in British Patent 1 583 403.

From document JP-A 61-31 721 it is known to provide axial resilience in the pressure plate by use of a fulcrum ring having a T-shaped cross-section which is resiliently mounted in an annular groove on the pressure plate.

The present invention seeks to provides a clutch cover assembly having a resilient means on the pressure plate which utilises a standard circular cross-section fulcrum ring so that the cover assembly is easier to manufacture than the prior art cover.

According to the invention there is provided a friction clutch cover assembly comprising a pressure plate, a coaxial cover, a coaxial diaphragm spring located between the cover and the pressure plate for loading the pressure plate and a coaxial annular fulcrum ring acting between the diaphragm spring and the pressure plate, said pressure plate being provided with a coaxial annular groove having an entrance mouth receiving the fulcrum ring and an elastomeric material member disposed in the groove to act between the fulcrum ring and the pressure plate and which is axially deformable when subject to a load by the diaphragm spring, characterised in that the fulcrum ring has a substantially circular radial cross-sections, the annular groove is a stepped groove having a narrow base portion and a wider entrance mouth with a shoulder therebetween, the elastic material being located in and standing proud of the base portion of the groove, and said entrance mouth of the groove has a radial width capable of receiving the maximum radial width of the fulcrum ring so that the fulcrum ring can abut the shoulder after a predetermined axial movement.

The elastomeric material may be a heat resistant elastomeric material.

Preferably the annular groove is located in an annular rib on the pressure plate.

Coveniently the axial movement of the fulcrum ring on the elastomeric material is arrested before the elastomeric material is subject to the full clamp load of the diaphragm spring. This modification seeks to prevent the elastomeric material from taking on a "set" due to being subject to high loads when the clutch is fully engaged.

The mouth portion of the groove and the fulcrum ring may be inter-related so that the fulcrum ring stands proud of the groove when in abutment with the shoulder.

The invention will be described by way of example and with reference to the accompanying drawings in which:

Fig. 1 is a plan view of a clutch cover assembly according to this invention,

Fig. 2 is a section on the line II - II of Fig. 1 and also showing the clutch cover assembly fitted in a vehicle friction clutch,.

Fig. 3 is an enlarged section through a clutch cover assembly according to this invention, showing the resilient fulcrum means in the pressure plate, and

Fig. 4 is a detailed enlargement of yet another alternative resilient fulcrum means.

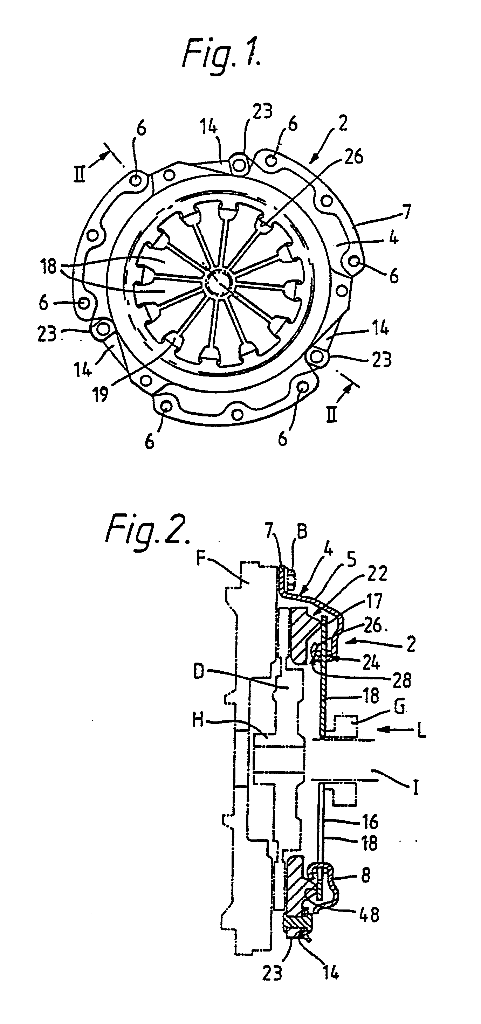

With reference to Figs. 1 and 2 there is illustrated a push-type friction clutch cover assembly 2, comprising an annular cover 4, a pressure plate 22 located coaxially within the cover 4, and a coaxial diaphragm spring 16 located between the cover and the pressure plate to bias the pressure plate 22 away from the cover 4.

The cover 4 comprises a cylindrical sidewall 5 having a radiallly outwardly projecting flange 7 at one axial end thereof and a radially inwardly projecting flange 8 at the other end. The outwardly projecting flange 7 has a plurality of holes 6 therein whereby the cover is attached by bolts B to flywheel F on the crankshaft of a vehicle engine. The inwardly projecting flange 8 has a plurality of tabs 26 on its radially inner periphery whereby the diaphragm spring 16 is attached to the cover.

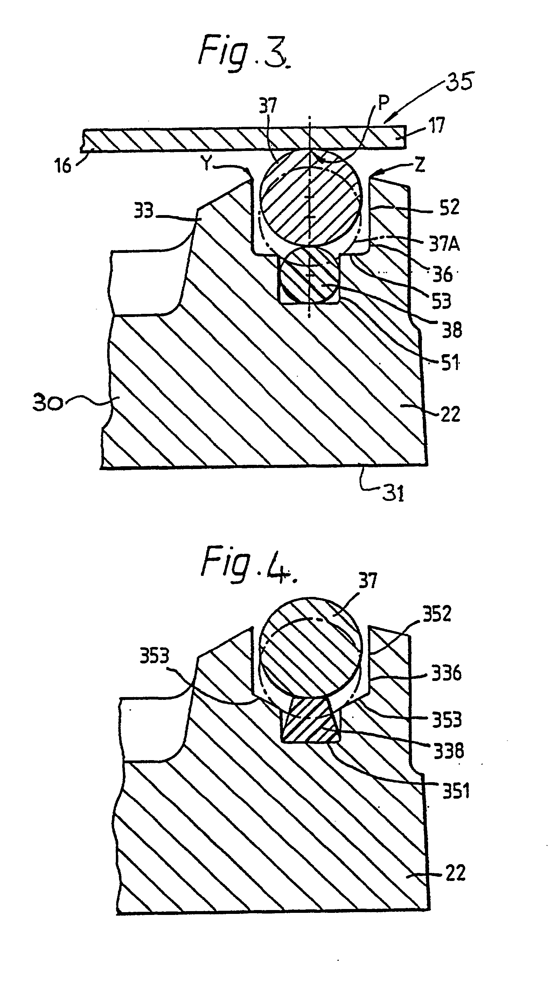

The spring 16 is a frustoconical plate spring coned away from the pressure plate 22 and having a radially outer continuous annular portion 17 with a plurality of spaced radially inwardly extending fingers 18 projecting from the radially inner periphery of the annular portion 17. The spring 16 is attached to the cover 4 by the tabs 26 on the cover, extending through respective apertures 19 at the base of the fingers 18 and being bent around the continuous portion 17 of the spring to clinch the spring to the cover. A pair of coaxial fulcrum rings 24 and 28 are located one on each side of the diaphragm spring and are located against the radially outer surface of the tabs 26 prior to the tabs being bent around the spring I6. The outer margin I7 of the spring I6 acts against a fulcrum means 35 (Fig. 4) on the pressure plate 22.

When the cover assembly is mounted on the flywheel F the pressure plate 22 is biased by the spring I6 to clamp a driven plate D between itself and the flywheel F. The hub H of the driven plate D is fitted onto a gearbox input shaft I. To release the driven plate D, a release load L is applied to the radially inner ends of the spring fingers I8, via a clutch release bearing G, to move the inner ends of the fingers towards the flywheel F, causing the outer annular portion I7 of the spring to pivot about the fulcrum rings 24, 28 and move away from the flywheel F. When the clutch is re-engaged the reverse operation takes place.

The pressure plate 22 is made rotationally fast with the cover 4 by three sets of drive straps I4 which extend between the cover and lugs 23 on the outer periphery of the plate 22. The drive straps I4 allow for axial movement of the pressure plate 22 relative to the cover 4 whilst holding the two rotationally fast.

Cover assembly 2 is shown in more detail in Figs. 3 and 4, the pressure plate 22 is an annular cast-iron body 30 having on one axial side a friction surface 3I for engagement with the driven plate, and on its other axial side a raised annular rib 33 extending axially away from the friction surface 3I. The fulcrum means 35 is located in an annular groove 36 located in the top portion of the rib 33. The fulcrum means 35 comprises a fulcrum ring 37, which may be axially substantially rigid, and which is supported on a bed of elastomeric material in the form of a rubber ring 38. The resilient elastomeric material 38 provides for the axial cushioning in the clutch during the re-engagement of the clutch.

The rubber ring 38 can be made out of a heat resistant elastomer. If desired the groove 38 can be lined by a heat insulating layer.

The fulcrum ring 37 can be a split ring or a continuous ring, and whilst in the above example the groove 36 and the rubber ring 38 are continuous, they could both be interrupted.

The cross-section of the rubber ring can be designed to suit the clutch characteristics that are required and the flow characteristic of the rubber can also be made to suit.

The full clamping load of the spring 16 is prevented from acting on the rubber ring 38. The outer margin 17 of the frustoconical spring 16 rests on the circular cross-section fulcrum ring 37 which is shown in full line in the clutch released mode and in dotted line 37A in the clutch fully engaged mode.

The groove 36 is a stepped groove having a narrower base portion 51 and a wider entrance mouth portion 52 with a shoulder 53 therebetween. Preferably the narrow portion 51 symmetrically located with respect to the wider mouth portion 51, to provide a pair of square shoulders 53. The elastomeric material 38 has a circular cross-section and in a clutch released mode projects above the shoulders 53 to stand proud of the base portion 51, and the fulcrum ring 37 locates in the wider mouth portion 52 of the groove. The fulcrum ring 37 is of sufficient cross-section so that when subject to an axial load due to the clamping load of the diaphragm spring, then after a predetermined amount of deformation of the elastomeric material 38 the fulcrum ring 37 will abut the shoulders 53, before the full clamping load of the spring is exerted on the elastomeric material. It is preferable for the fulcrum ring 37 and the mouth portion 52 of the groove 36 to have interrelated dimensions so that the ring 37 stands proud of the groove even when it is bottomed on the shoulders 53, as shown in dotted lines 37A. This is because, if the fulcrum ring 37 sinks completely into the annular groove 36, the fulcrum point P for the diaphragm spring would alter from the fulcrum ring to either position Y or position Z on the annular rib, thus altering the lever ratio for the spring fingers 16. This may relay a disquieting feed-back to the vehicle driver.

The elastomeric material may be in the form of extruded "0" ring material, or as a length or plurality of interrupted lengths in an annular array, or could be cured in-situ in the groove. A silicone rubber is preferred.

In figure 4 there is shown an alternative cross-section of stepped groove 336 in which the shoulders 353 are chamfered or otherwise shaped to provide a preferred load bearing surface tending to make surface rather than edge contact with the fulcrum ring. The elastomeric material 338 can be shaped to give the desired load/deflection characteristics.

## Claims

1. A friction clutch cover assembly (2) comprising a pressure plate (22), a coaxial cover (4), a coaxial diaphragm spring (16) located between the cover (4) and the pressure plate (22) for loading the pressure plate, and a coaxial annular fulcrum ring (37) acting between the diaphragm spring (16) and the pressure plate (22), said pressure plate being provided with a coaxial annular groove (36; 336) having an entrance mouth receiving the fulcrum ring (37), and an elastomeric material member (38; 338) disposed in the groove to act between the fulcrum ring (37) and the pressure plate (22) and which is axially deformable when subject to a load by the diaphragm spring (16), characterised in that the fulcrum ring (37) has a substantially circular radial cross-section, the annular groove (36; 336) is a stepped groove having a narrow base portion (51; 357) and a wider entrance mouth width (52; 352) with a shoulder (53; 353) therebetween, the elastomeric material member being located in and standing proud of the base portion (52; 352), and said entrance mouth (52; 352) of the groove (36; 316) has a radial width capable of receiving the maximum radial width of the fulcrum ring (37) so that the fulcrum ring (37) can abut the shoulder (53; 353) after a predetermined axial movement.

2. A friction clutch cover assembly as claimed in claim 1, characterised in that the stepped annular groove (36; 336) is located in an annular rib (33; 133) on the pressure plate (22; 122).

3. A friction clutch cover assembly as claimed in claim 2 characterised in that the annular groove (36; 336) is a continuous groove, and elastomeric material means (38) is also in the form of a continuous ring.

4. A clutch cover assembly as claimed in any one of claims 1 to 3 characterised in that the axial movement of the fulcrum ring (37) on the deformable elastomeric material (38; 338) is arrested before the elastomeric material member is subject to the full clamp load of the diaphragm spring (16).

5. A clutch cover assembly as claimed in any one of claims 1 to 4, characterised in that the dimensions of the fulcrum ring (37) and the entrance mouth portion (52; 353) of the groove are inter-related such that the fulcrum ring stands proud of the groove when the fulcrum ring abuts the shoulder (53; 353).

6. A clutch cover assembly as claimed in any one of claims 1 to 5 characterised in the narrow base portion (51) of the groove (36) is symetrically located within the wider mouth portion (52) to provide a pair of shoulders (53) against which the fulcrum ring (37) can abut.

7. A clutch cover assembly as claimed in any one of claims 1 to 6 characterised in that the shoulders (53) in the groove are shaped to provide surface contact with the fulcrum ring (37).

8. A clutch cover assembly as claimed in claim 7 wherein the shoulders (53) are chamfered.

**Patentansprüche**

1. Reibungskupplungsgehäuseanordnung (2) mit einer Druckscheibe (22), einem koaxialen Gehäuse (4), einer koaxialen Membranfeder (16), die zwischen dem Gehäuse (4) und der Druckscheibe (22) zum Belasten der Druckscheibe angeordnet ist, und einem koaxialen ringförmigen Drehpunktring (37), der zwischen der Membranfeder (16) und der Druckscheibe (22) wirkt, wobei die Druckscheibe mit einer koaxialen ringförmigen Rille (36; 336) versehen ist, die eine Eingangsöffnung zur Aufnahme des Drehpunktringes (37) hat, und einem Elastomerteil (38; 338), das in der Rille angeordnet ist, um zwischen dem Drehpunktring (37) und der Druckscheibe (22) zu wirken, und das axial verformbar ist, wenn es einer Belastung durch die Membranfeder (16) ausgesetzt wird, dadurch gekennzeichnet, daß der Druckpunktring (37) einen im wesentlichen kreisförmigen radialen Querschnitt hat, die ringförmige Rille (36; 336) eine abgestufte Rille ist, die einen engen Bodenteil (51; 357) und eine größere Eingangsöffnungsbreite (52; 352) mit einer Schulter (53; 353) dazwischen hat, wobei das Elastomerteil in dem Bodenteil (52; 352) angeordnet ist und aus dem Bodenteil (52; 352) hervorsteht, und die Eingangsöffnung (52; 352) der Rille (36; 316) eine radiale Breite hat, die in der Lage ist, die maximale radiale Breite des Drehpunktringes (37) aufzunehmen, so daß der Drehpunktring (37) nach einer vorbestimmten Axialbewegung an der Schulter (53; 353) anliegen kann.

2. Reibungskupplungsgehäuseanordnung nach Anspruch 1, dadurch gekennzeichnet, daß die abgestufte ringförmige Rille (36; 336) in einer ringförmigen Rippe (33; 133) an der Druckscheibe (22; 122) angeordnet ist.

3. Reibungskupplungsgehäuseanordnung nach Anspruch 2, dadurch gekennzeichnet, daß die ringförmige Rille (36; 336) eine ununterbrochene Rille ist, und das Elastomerteil (38) auch in der Form eines durchgehenden Ringes ist.

4. Kupplungsgehäuseanordnung nach einem der Ansprüche 1 bis 3, dadurch gekennzeichnet, daß die Axialbewegung des Drehpunktringes (37) auf dem verformbaren Elastomerteil (38; 338) unterbrochen wird, bevor das Elastomerteil der vollen Klemmbelastung der Membranfeder (16) unterworfen wird.

5. Kupplungsgehäuseanordnung nach einem der Ansprüche 1 bis 4, dadurch gekennzeichnet, daß die Abmessungen des Drehpunktringes (37) und des Eingangsöffnungsteiles (52; 353) der Rille derart zueinander in Beziehung stehen, daß der Drehpunktring aus der Rille hervorsteht, wenn der Drehpunktring an der Schulter (53; 353) anliegt.

6. Kupplungsgehäuseanordnung nach einem der Ansprüche 1 bis 5, dadurch gekennzeichnet, daß der enge Bodenteil (51) der Rille (36) symmetrisch innerhalb des weiteren Öffnungsteiles (52) angeordnet ist, um zwei Schultern (53) zu schaffen, an denen der Drehpunktring (37) anliegen kann.

7. Kupplungsgehäuseanordnung nach einem der Ansprüche 1 bis 6, dadurch gekennzeichnet, daß die Schultern (53) in der Rille so geformt sind, daß ein Flächenkontakt mit dem Drehpunktring (37) geschaffen wird.

8. Kupplungsgehäuseanordnung nach Anspruch 7, bei welcher die Schultern (53) abgeschrägt sind.

**Revendications**

1. Ensemble couvercle d'embrayage à friction (2) comprenant un plateau de pression (22), un couvercle coaxial (4), un ressort diaphragme coaxial (16) placé entre le couvercle (4) et le plateau de pression pour charger le plateau de pression (22), et un anneau d'appui annulaire coaxial agissant entre le ressort diaphragme (16) et le plateau de pression (22), le plateau de pression étant muni d'une gorge annulaire coaxiale (36; 336) qui présente une bouche d'entrée recevant l'anneau d'appui (37) et un élément en matière élastomère (38; 338) disposé dans la gorge pour agir entre l'anneau d'appui (37) et le plateau de pression (22) et qui peut se déformer axialement lorsqu'il est soumis à une charge par le ressort diaphragme (16), caractérisé en ce que l'anneau d'appui (37) possède une section radiale à peu près circulaire, la gorge annulaire (36; 336) est une gorge épaulée possédant une partie de fond étroite (51; 357) et une largeur de bouche d'entrée (52; 352) plus large, avec un épaulement (53; 353) entre elles, l'élément en matière élastique étant placé dans la portion de fond (52; 352) de la gorge et débordant en dehors de cette portion, et ladite bouche d'entrée (52; 352) de la gorge (36; 316) présente une largeur radiale capable de recevoir la largeur radiale maximale de anneau d'appui (37) de manière

que l'anneau d'appui (37) puisse venir buter contre l'épaulement (53; 353) après un déplacement axial prédéterminé.

2. Ensemble couvercle d'embrayage à friction selon la revendication 1, caractérisé en ce que la gorge annulaire épaulée (36; 336) est prévue dans une nervure annulaire (33; 133) du plateau de pression (22; 122).

3. Ensemble couvercle d'embrayage à friction selon la revendication 2, caractérisé en ce que la gorge annulaire (36; 336) est une gorge continue et que la matière élastomère (38) est elle aussi présentée sous la forme d'un anneau continu.

4. Ensemble couvercle d'embrayage selon l'une quelconque des revendications 1 à 3, caractérisé en ce que le déplacement axial de l'anneau d'appui (37) sur la matière élastomère déformable (38; 338) est arrêté avant que l'élément en matière élastomère ne soit soumis à la pleine charge de serrage du ressort diaphragme (16).

5. Ensemble couvercle d'embrayage selon l'une quelconque des revendications 1 à 4, caractérisé en ce que les dimensions de l'anneau d'appui (37) et celles de la portion bouche d'entrée (52; 353) de la gorge sont liées par une relation telle que l'anneau d'appui émerge encore de la gorge lorsque l'anneau d'appui bute contre l'épaulement (53; 353).

6. Ensemble couvercle d'embrayage selon l'une quelconque des revendications 1 à 5, caractérisé en ce que la portion de fond étroite (51) de la gorge (36) est disposée symétriquement dans la portion bouche plus large (52) pour donner naissance à deux épaulements (53) contre lesquels l'anneau d'appui (57) peut venir buter.

7. Ensemble couvercle d'embrayage selon l'une quelconque des revendications 1 à 6, caractérisé en ce que les épaulements (53) formés dans la gorge sont conformés de manière à établir un contact par surfaces étendues avec l'anneau d'appui (37).

8. Ensemble couvercle d'embrayage selon la revendication 7, dans lequel les épaulements (53) sont chanfreinés.

# Fig. 1.

# Fig. 2.

EP 0 249 469 B1

Fig.3.

Fig.4.